# EUROPÄISCHE PATENTSCHRIFT

(11) **EP 0 419 442 B1**
(45) Veröffentlichungstag und Bekanntmachung des Hinweises auf die Patenterteilung: **14.09.1994**
(21) Anmeldenummer: 90890249.7
(22) Anmeldetag: 24.08.1990
(51) Int. Cl.: C12C 7/14

(54) **Abläutervorrichtung**
Lauter tub
Cuve-matière de séparation

(30) Priorität: 24.08.1989 AT 2007/89
(43) Veröffentlichungstag der Anmeldung: 27.03.1991
(73) Patentinhaber: Kühtreiber, Franz, Dipl.-Ing.Dr.Techn., A-2136 Laa an der Thaya (AT)
(72) Erfinder: Kühtreiber, Franz, Dipl.-Ing.Dr.Techn., A-2136 Laa an der Thaya (AT)
(74) Vertreter: Gibler, Ferdinand, Dipl.Ing. Dr. techn.

(56) Entgegenhaltungen:
- DE-C- 963 952
- GB-A- 2 075 545
- US-A- 2 262 863

## Beschreibung

Die Erfindung bezieht sich auf eine Abläutervorrichtung mit einem Läuterbottich und in dessen Bodenbereich angeordneten nach unten führenden Läuterrohren, die zu einem mit einem Abfluß versehenen zentralen Sammelbehälter führen, wobei alle Läuterrohre mit dem gleichen Fließwiderstand ausgebildet sind.

Im Läuterbottich wird nach Abschluß des Maischverfahrens die Vorderwürze von den ungelösten Substanzen, hauptsächlich den Malzspelzen, getrennt. Ist die Vorderwürze abgeläutert, bringt man auf die Oberfläche der Treber in Form mehrerer Nachgüsse soviel temperiertes Wasser auf, daß der zurückgebliebene Restextrakt möglichst vollkommen daraus gewonnen wird.

Das Prinzip des Läuterbottichs ist seit langer Zeit unverändert. Er besteht aus einem Gefäß mit einem ebenen Boden, in dem etwa pro 0,8 - 1,0 m² Fläche ein Läuterrohranschluß vorgesehen ist. Mit ungefähr 15 - 20 mm Abstand darüber liegt der sogenannte Senkboden, ein starker Blechboden aus rostfreiem Stahl oder Phosphorbronze, mit Schlitzen von 0,7 mm Breite, die auf die gesamte Fläche bezogen ungefähr 14 % freien Durchgang ergeben. Anstelle dieser gefrästen Bleche verwendet man auch häufig schon Roste aus entsprechend eng angeordneten Profilstäben. Es hängt nun von der Geschicklichkeit des Biersieders ab, daß er mit möglichst wenig aufgebrachtem Nachgußwasser den Treberkuchen möglichst vollkommen auslaugt. Benötigt er zuviel Wasser, muß zuviel verdampft werden, das kostet einerseits Energie und wirkt sich geschmacklich häufig wenig vorteilhaft aus. D.h. der Biersieder muß den Ablauf der einzelnen Läuterrohre so regeln, daß die extraktreicheren stärker und die extraktärmeren schwächer laufen.

Heute ist es üblich, anstelle der Handabläuterung eine sogenannte Zentralabläuterung einzusetzen. Man sammelt dazu die Abläuterrohre in zwei zentral angeordneten Gefäßen bzw. Ringrohren, und zwar ordnet man die inneren Läuterrohre einem ersten und die äußeren einem zweiten Gefäß bzw. Ringrohr zu. Diese Trennung ist die Folge der Erkenntnis, daß die inneren Abläuterrohre wesentlich rascher laufen als die äußeren. Im übrigen hofft man, daß durch die moderne Aufschneidetechnik eine möglichst vollkommene Ausbeute, die in die Nähe der Laborausbeute kommt, erzielt wird.

Es wurde immer wieder versucht, dieses Läuterbottich-System zu verbessern. Eine wirklich funktionierende Lösung, die mit einem Minimum an Nachgußwasser ein Maximum an Extrakt zu gewinnen erlaubte, gab es nicht. Eine grundsätzliche Idee hiezu findet man in der DE-PS 645 467, in der eine Vorrichtung beschrieben wird, mittels der durch an die Läuterrohre angeschlossene Fallrohre erreicht werden soll, daß die Fallrohre mit extraktreicheren Würzen rascher und die mit extraktärmeren Würzen langsamer fließen. Das erscheint auch sehr einleuchtend, weil bei gleicher Fallrohrlänge die zur Verfügung stehenden Auslaufdrücke entsprechend dem Extraktgehalt variieren und schon ein Extraktgrad Unterschied, z.B. zwischen 10 und 11°P bei 1 m Fallrohrhöhe, 4,2 mm Wassersäule Druckunterschied bedeutet, mit dementsprechend höherer Fließgeschwindigkeit zugunsten des Rohres mit der extraktreicheren Würze.

Diese Vorrichtung versagte aber in der Praxis. Es wurde folgendes nicht beachtet:
1) daß bei den üblichen Durchmessern der Läuterrohre von 25-35 mm, manchmal auch 40 mm, bei den gegebenen Fließgeschwindigkeiten der Reibungswiderstand pro 1fm bei 200 ml/s bei DN 25 11,3 mm WS und bei DN 32 3,6 mm WS beträgt, und damit ein Teil der Dichteunterschiede egalisiert wird.
2) waren wohl die senkrechten Fallrohre gleich lang, aber die Zuleitung zu diesen waren sehr unterschiedlich lang, eben je nachdem, von welcher Stelle des Läuterbottichbodens diese herangeführt werden, was sich in ebenso unterschiedlichen Fließwiderständen auswirkte, was weitere Abweichungen im Fließverhalten bedeutete.

Abgesehen davon wurden bei diesem bekannten System die Fallrohre in Sammelrohre eingeleitet, sodaß die Fallrohre, welche der Ableitung aus diesem Sammelrohr am nächsten einmündeten, dadurch zu einem unverhältnismäßig stärkeren Fließen angeregt wurden.

Weiters ist aus der DE-AS 1 073 987 ein Läuterbottich mit in Sammelrohre mündenden, gleich langen Abläuterrohren bekannt, wodurch an allen Anstichen gleiche Abflußgeschwindigkeiten gewährleistet sein sollen. Es werden jedoch bei dieser Lösung zwar gleich lange Abläuterrohre gewählt, diese münden aber in ein Sammel-Ringrohr, dessen Ableitungen zu den einzelnen Abläuterrohren verschiedene Winkel und Entfernungen aufweisen. Durch diese Unsymmetrie kommt es wiederum zu unterschiedlichen Sogwirkungen auf die Abläuterrohre.

Diese bekannten Vorrichtungen versagten daher alle in der Praxis, da zwar die einzelnen Läuterrohrdimensionen und -eigenschaften entsprechend gewählt wurden, jedoch nicht beachtet wurde, daß auch die Übergangsbereiche von Läuterbottich zu Läuterrohr und von Läuterrohr zu Sammelbehälter das beschriebene automatische Auslaufdrosselungsprinzip stören.

Die Erfindung setzt sich daher zum Ziel, eine Vorrichtung der eingangs erwähnten Art zu schaffen, die mit einem Minimum an Nachgußwasser noch mehr an Extrakt zu gewinnen erlaubt als die bekannten Lösungen.

Dieses Ziel wird gemäß der Erfindung dadurch erreicht, daß der Abfluß des Sammelbehälters zu allen in den Sammelbehälter mündenden Zuflüssen der Läuterrohre gleichen Abstand aufweist und mit allen diesen Zuflüssen den gleichen Winkel einschließt, daß die gleichen Fließwiderstand aufweisenden Läuterrohre im Bereich ihres Anschlusses an den Läuterbottichboden konisch erweitert und so ausgestaltet sind, daß sich der Abflußkegel zu dem tiefer liegenden eigentlichen Läuterrohr entsprechend dem Höhenabstand zu diesem und dem Querschnitt der Einmündungsöffnung der Erweiterung in den Läuterbottichboden unbehindert ausbilden kann, und daß der Querschnitt der Einmündungsöffnung der Erweiterung in den Läuterbottichboden um zumindest das 5 fache größer als der Querschnitt des an die Erweiterung anschließenden, nicht erweiterten Läuterrohres ist.

Dadurch, daß der Abfluß des Sammelbehälters zu allen in den Sammelbehälter mündenden Zuflüssen der Läuterrohre gleichen Abstand aufweist und mit allen diesen Zuflüssen den gleichen Winkel einschließt, wird gewährleistet, daß auch in diesen kritischen Übergangsbereichen die Strömungsbedingungen in den einzelnen Läuterrohren gleichmäßig gestaltet sind, wodurch das Prinzip der automatischen Drosselung der Ablaufgeschwindigkeit von zu extraktarmen Würzen aufgrund des Rohrfließwiderstandes und des spezifischen Gewichts der Würze noch besser ausgenützt werden kann als beim Stand der Technik.

Dabei sind sämtliche Konstruktionsparameter für das Läuterrohrsammelsystem wie Länge, Querschnitt, Krümmung und Reibungsbeiwert der Innenwand pro Läuterrohr unter einer solchen gegenseitigen Bezugnahme zu wahren, daß jedes Läuterrohr tatsächlich den gleichen Fließwiderstand besitzt.

Ergebnisverbessernd wirkt, wenn hinsichtlich des Ablaufsoges beim Austreten der Würze aus dem Läuterbottich kein Läuterrohr bevorzugt wird, was - wie bereits weiter oben dargelegt - erfindungsgemäß dadurch erreicht wird, daß die Läuterrohre im Bereich ihres Anschlusses an den Läuterbottichboden konisch erweitert und so ausgestaltet sind, daß sich der Abflußkegel zu dem tiefer liegenden eigentlichen Läuterrohr entsprechend dem Höhenabstand zu diesem und dem Querschnitt der Einmündungsöffnung der Erweiterung in den Läuterbottichboden unbehindert ausbilden kann. Dies bewirkt, daß der Abflußkegel der in Richtung Läuterrohr strömenden Würze wenigstens zum Teil von der Erweiterung aufgenommen wird, wodurch auf dem Niveau des Läuterbottichbodens dementsprechend geringere nicht mehr so störende Sogkräfte wirken. Wesentlich in diesem Zusammenhang ist, daß sich der Teil des Abflußkegels, der von der Erweiterung aufgenommen wird, unbehindert ausbilden kann. Die Form des Ablaufkonus bzw. dessen Kreisfläche im Niveau des Bottichbodens ist nach den Lehren der Hydrodynamik unter Berücksichtigung des Höhenabstandes vom eigentlichen Läuterrohr bis zum Bottichboden ohne weiteres berechenbar und danach die Formgebung des Läuterrohranschlusses festlegbar. Mit anderen Worten: bei Anschluß der Läuterrohre mittels deren konischen Erweiterungen sind diese zweckmäßig so auszubilden, daß der Erweiterungsquerschnitt zumindest so groß ist, daß die gesamte Strömung in diesem unterkommt, wozu - wie bereits ausgeführt - erfindungsgemäß so vorgegangen wird, daß der Querschnitt der Einmündungsöffnung der Erweiterung in den Läuterbottichboden in obigem Sinne um zumindest das 5 fache größer als der Querschnitt des an die Erweiterung anschließenden, nicht erweiterten Läuterrohres ist. Derselbe Fließwiderstand in jedem Läuterrohr kann in besonders effizienter Weise erfindungsgemäß dadurch erreicht werden, wenn die Läuterrohre polierte, insbesonders elektrochemisch polierte Innenwände aufweisen.

Die Erfindung wird nun anhand der Zeichnungen beispielsweise erläutert. Dabei zeigen:
Fig. 1 schematisch einen Schnitt durch eine erfindungsgemäße Einrichtung,
Fig. 2 eine Druntersicht auf den Boden des Läuterbottichs,
Fig. 3, 5, 7 jeweils eine Tabelle betreffend Extraktkonzentrationen in den einzelnen Läuterrohren einer erfindungsgemäßen Abläutervorrichtung,
Fig. 4, 6, 8 jeweils das der Fig. 3, 5 bzw. 7 entsprechende Kurvendiagramm,
Fig. 9 eine Tabelle betreffend Extraktkonzentrationen in den einzelnen Läuterrohren bei einer Abläutervorrichtung nach dem Stand der Technik und
Fig. 10 das zugehörige Kurvendiagramm.

Der Läuterbottich 2 ist durch ein Gefäß mit einem ebenen Boden gebildet, in dem die Läuterrohre 1 gehalten sind. Der Einlaufbereich 7 der Läuterrohre ist in Form eines Konus erweitert. Hiebei ist der Querschnitt der Einmündungsöffnung der Erweiterung in den Läuterbottichboden um zumindest das 6-8 fache größer als der Querschnitt des an die Erweiterung anschließenden, nicht erweiterten Läuterrohres sein.

Bei dem vorliegenden Ausführungsbeispiel konnte die Forderung, daß der Erweiterungsquerschnitt zumindest so groß ist, daß die gesamte Strömung in ihm unterkommt, bei einem Läuterrohrdurchmesser von 50 mm dadurch erreicht werden, daß der Öffnungswinkel des Konus ca. 18-20° und der Durchmesser der Einmündungsöfnung der konusförmigen Erweiterung in den Läuterbottichboden 250 mm betrug. Die am Niveau der Einmündungsöffnung wirkenden Sogkräfte waren nur mehr so gering, daß sie keine nennenswerte Ansaugwirkung mehr entfaltete. Weiters ist in dem Läuterbottich 2 ein Rost 8 angeordnet, der einen freien Durchströmquerschnitt im Bereich von etwa 14 % aufweist.

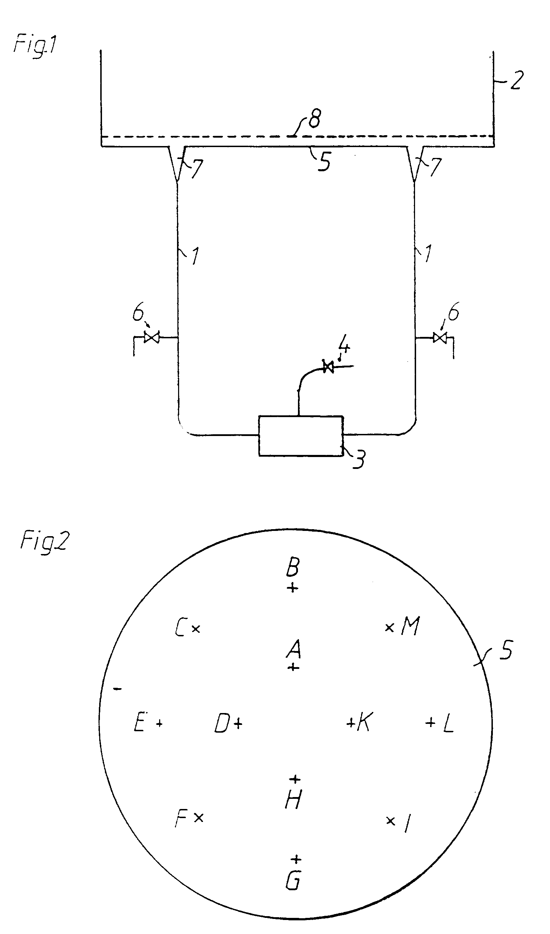

Die Läuterrohre schließen an den in Fig. 2 mit den Buchstaben A - M bezeichneten Stellen an den Boden 5 des Läuterbottichs 2 an. Diese Läuterrohre 1 weisen alle die gleiche Länge, Querschnitt, Krümmung und Innenwand-Reibungsbeiwert auf. Die Läuterrohre führen zu einem Sammelbehälter 3, der über eine Ableitung 4 mit einer nicht dargestellten Würzpfanne verbunden ist. Dabei ist die Ableitung 4 zentral am Sammelbehälter 3 angeordnet. Die Innenwände der Läuterrohre sind poliert, insbesondere elektrochemisch poliert, um besonders glatte Oberflächen mit niedrigen Reibungsbeiwerten zu erzielen.

Dies stellt sicher, daß in allen Rohren gleiche Fließwiderstände gegeben sind und sich daher die Strömungsgeschwindigkeit in den einzelnen Läuterrohren 1 gemäß dem Extraktgehalt der durch diese strömenden Würze einstellt. Dadurch wird sichergestellt, daß Würzeanteile mit geringerem Extraktgehalt länger im Läuterbottich verbleiben bzw. langsamer aus diesem abfließen.

Der Abstand der Ableitung 4 von den einzelnen Einleitungen der Läuterrohre 1 ist gleich ebenso wie der Winkel, den die Ableitung 4 mit den Läuterrohren 1 einschließt.

An den Läuterrohren 1 sind Probehähne 6 angeordnet, über die gleichzeitig aus allen 12 angedeuteten Läuterrohren 1 in bestimmten zeitlichen Abständen Proben entnommen werden können, aus denen der Extraktgehalt bestimmt werden kann.

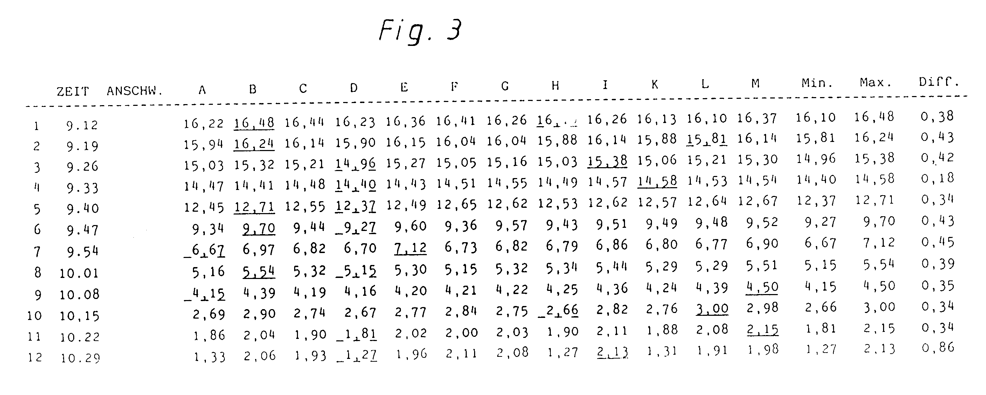

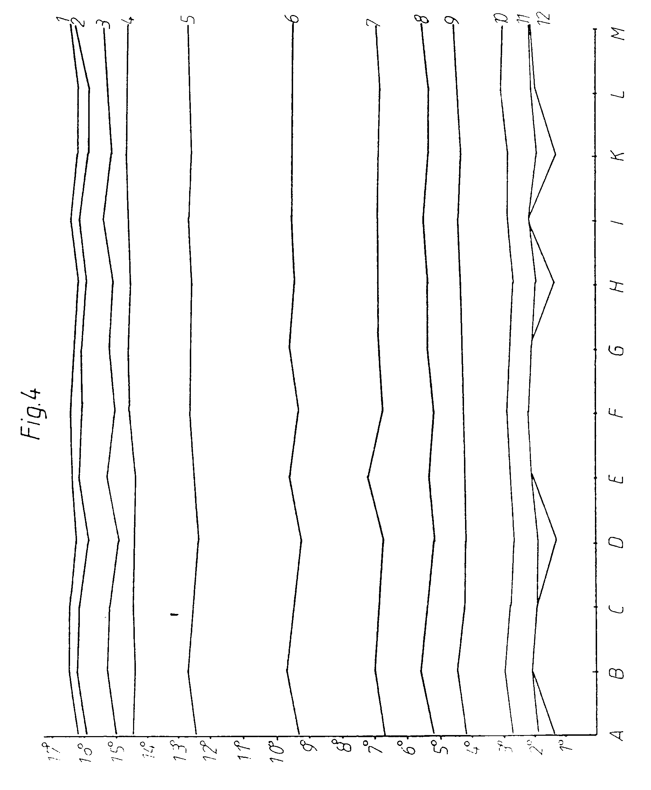

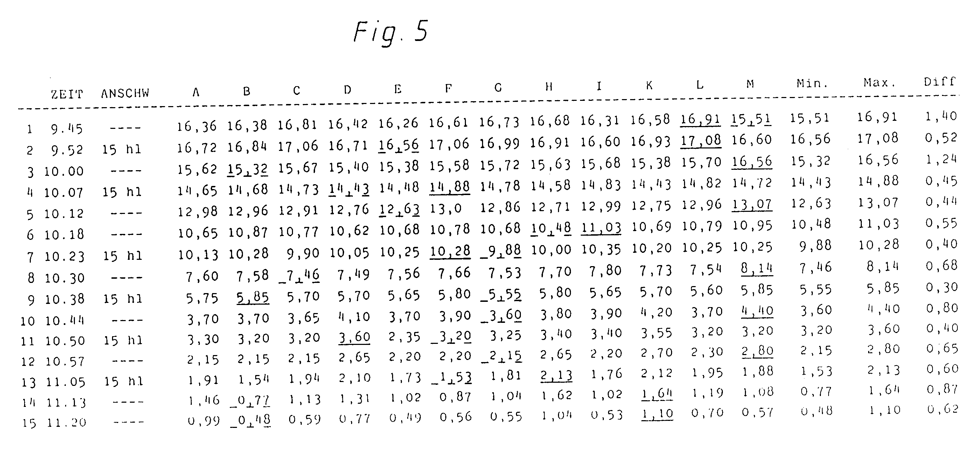

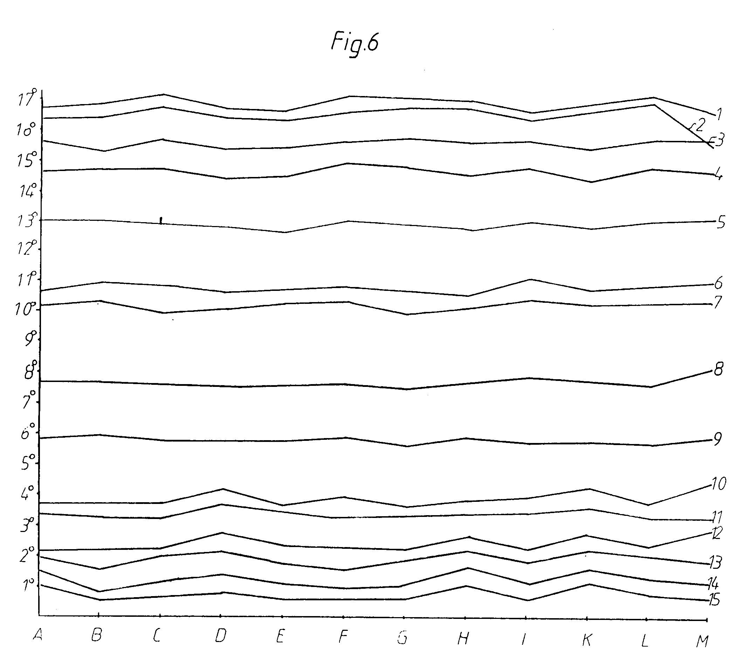

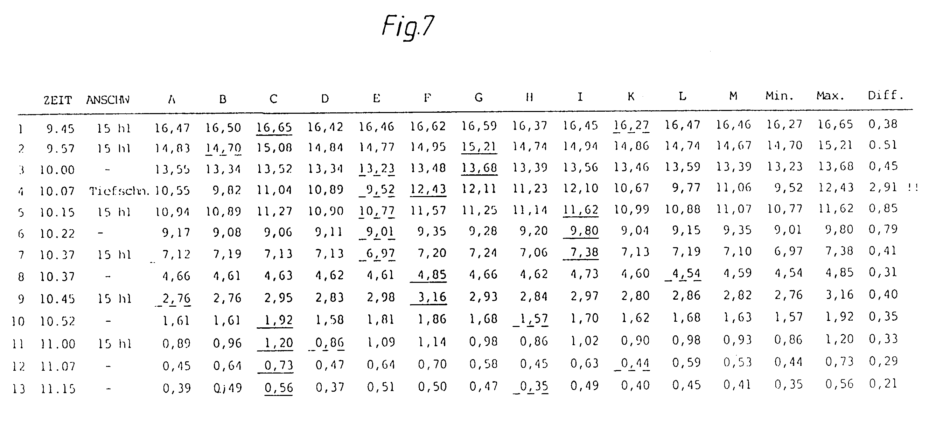

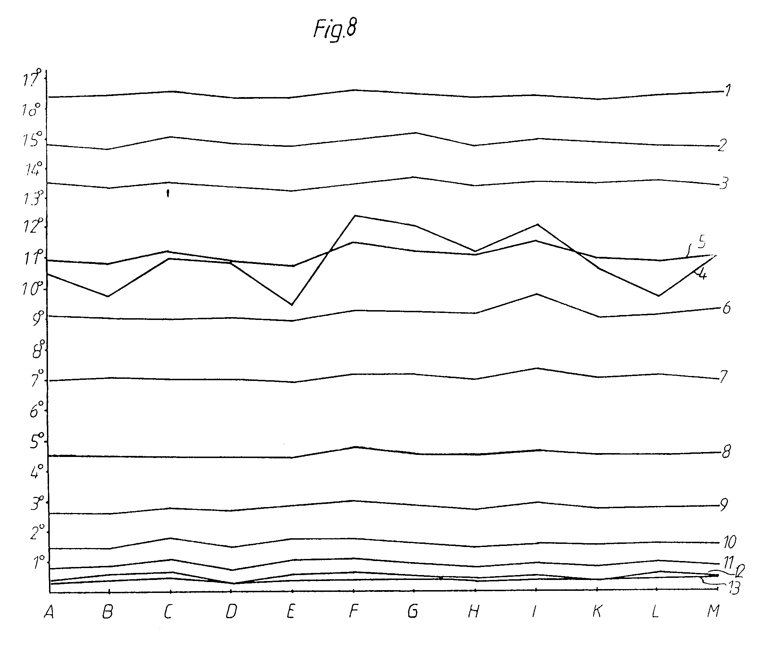

Bei einem nach obigen Überlegungen gebauten Läuterbottich von 3,70 m Durchmesser für 3000 kg Malzschüttung berechnet, wurden alle Erwartungen erfüllt. Der Läuterbottichboden 5 hatte 12 Läuterrohranschlüsse mit den Bezeichnungen A - M. Das Sammelgefäß 3 lag 3 m unterhalb des Läuterbottichs. Die Läuterrohre 1 hatten einen Durchmesser von 50 mm (DN 50) und waren innen elektrochemisch poliert. Mit den an den 12 Läuterrohren montierten Probenahmehähnen 6 wurden jeweils gleichzeitig aus allen 12 Rohren in Abständen von 5 - 7 Minuten Proben genommen. Nach Abschluß des Läutervorganges wurde in diesen Proben der Extrakt bestimmt, die entsprechenden Werte sind der Tabelle gemäß Fig. 3 zu entnehmen. Das dieser Tabelle entsprechende Kurvendiagramm gemäß Fig. 4 läßt die außerordentlich ausgleichende Wirkung dieses Systems erkennen. Nach mehreren Chargen wurde die Messung wiederholt, welche Werte die Tabelle gemäß Fig. 5 und Kurvendiagramm gemäß Fig. 6 zeigt; wieder ergibt sich die außerordentlich ausgleichende Wirkung des Systems. Die Meßergebnisse gemäß Fig. 3 bzw. die zufolge der Erfindung erreichbare Verbesserung ist somit reproduzierbar. Besonders interessant sind die Ergebnisse gemäß Tabelle nach Fig. 7 und zugehörigem Kurvendiagramm nach Fig. 8. Hier machte die Aufhackmaschine vor der Messung 4 einen Lockerungsumgang. Der krasse Durchbruch stärkerer Würzen bei der Messung 4 war schon bei der nächsten Messung 5, also 5 - 7 Minuten danach, wieder ausgeglichen.

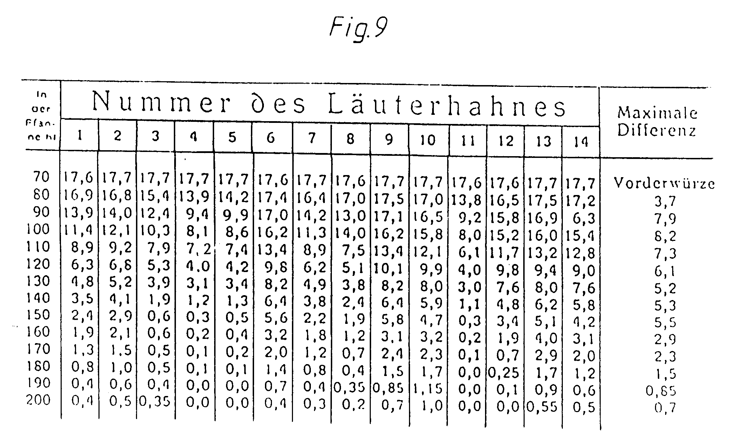

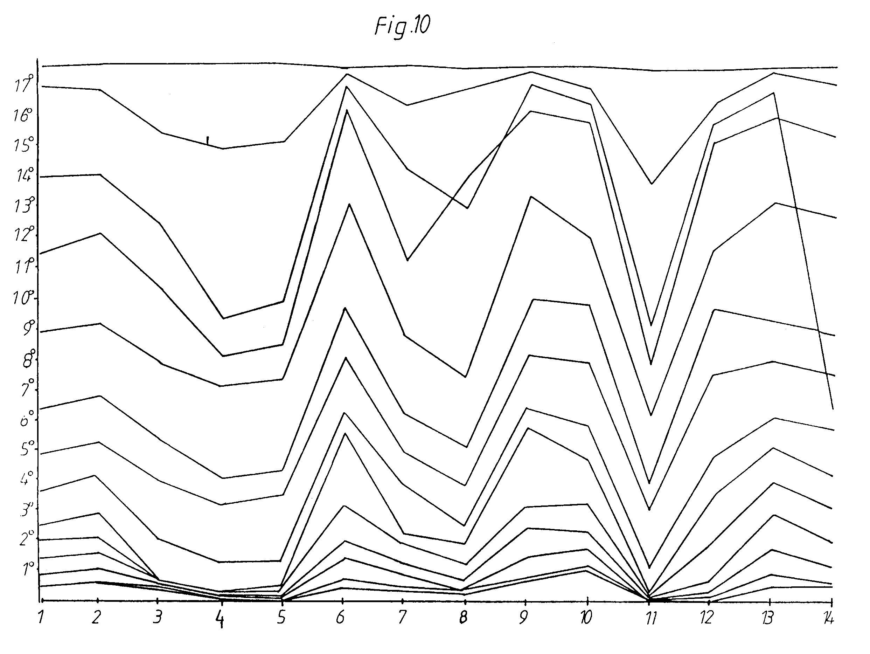

Zur Verdeutlichung der mit der Erfindung erzielbaren außerordentlichen Verbesserung sind als Fig. 9 Meßergebnisse angeführt, wie sie bei von Hand aus geregelten Systemen nach dem Stand der Technik erzielt werden; diese Tabelle ist dem Artikel von G. Jakob, "Die Saccharometrische Kontrolle der Nachgüsse mit Heiß-Saccharometern", Brautechnische Rundschau, Mai 1929, entnommen. Fig. 10 zeigt das zugehörige Kurvendiagramm, dem die unerwünschten, außerordentlich hohen Konzentrationsschwankungen der Würze von Läuterrohr zu Läuterrohr entnommen werden können.

Diese hohe gemäß der Erfindung erzielbare Qualität der Abläuterung erlaubt es nun, statt früher 12 - 15 % des Pfannenvolumens verdampfen zu müssen, mit 6 % das Auslangen zu finden. Weiters liegt die Sudhausausbeute regelmäßig über der sogenannten Laborausbeute.

## Patentansprüche

1. Albäutervorrichtung mit einem Läuterbottich und in dessen Bodenbereich angeordneten nach unten führenden Läuterrohren, die zu einem mit einem Abfluß versehenen zentralen Sammelbehälter führen, wobei alle Läuterrohre (1) mit dem gleichen Fließwiderstand ausgebildet sind, dadurch gekennzeichnet, daß der Abfluß (4) des Sammelbehälters (3) zu allen in den Sammelbehälter (3) mündenden Zuflüssen der Läuterrohre (1) gleichen Abstand aufweist und mit allen diesen Zuflüssen den gleichen Winkel einschließt, daß die gleichen Fließwiderstand aufweisenden Läuterrohre (1) im Bereich (7) ihres Anschlusses an den Läuterbottichboden konisch erweitert und so ausgestaltet sind, daß sich der Abflußkegel zu dem tiefer liegenden eigentlichen Läuterrohr entsprechend dem Höhenabstand zu diesem und dem Querschnitt der Einmündungsöffnung der Erweiterung in den Läuterbottichboden unbehindert ausbilden kann, und daß der Querschnitt der Einmündungsöffnung der Erweiterung in den Läuterbottichboden um zumindest das 5 fache größer als der Querschnitt des an die Erweiterung anschließenden, nicht erweiterten Läuterrohres ist.

2. Abläutervorrichtung nach Anspruch 1, dadurch gekennzeichnet, daß die Läuterrohre polierte, insbesonders elektrochemisch polierte Innenwände aufweisen.

## Claims

1. Straining apparatus having a lauter tun and, arranged in the bottom region thereof, downwards-leading wort pipes which lead to a central reservoir furnished with an outlet, all wort pipes (1) being designed with the same resistance to flow, characterized in that the outlet (4) of the reservoir (3) has the same distance from all the feeds, opening out into the reservoir (3), of the wort pipes (1) and includes the same angle with all these feeds, in that the wort pipes (1) having the same resistance to flow are conically expanded in the region (7) of their connection to the lauter tun bottom and are constructed so that the outlet cone to the lower-lying actual wort pipe, corresponding to the difference in height to this and to the cross-section of the junction orifice of the expansion into the lauter tun bottom, can develop unhindered, and in that the cross-section of the junction orifice of the expansion into the lauter tun bottom is larger, by at least 5 times, than the cross-section of the unexpanded wort pipe connecting to the expansion.

2. Straining apparatus according to Claim 1, characterized in that the wort pipes have polished, in particular electrochemically polished, internal walls.

## Revendications

1. Dispositif de décantation, comportant une cuve de décantation et des tubes de décantation, disposés dans sa zone de fond et menant vers le bas, à un récipient collecteur central, pourvu d'une voie d'écoulement, tous les tubes de décantation (1) étant réalisés avec une même résistance à l'écoulement, caractérisé en ce que la voie d'écoulement (4) du récipient collecteur (3) est à la même distance de toutes les amenées, débouchant dans le récipient collecteur (3), des tubes de décantation (1) et fait le même angle avec toutes ces amenées, en ce que les tubes de décantation (1) présentant la même résistance à l'écoulement sont élargis coniquement dans la zone (7) de leur raccordement au fond de la cuve de décantation et sont configurés de manière que le cône d'évacuation allant au tube de décantation proprement dit situé plus profondément peut être configuré, en fonction de la différence de niveau par rapport à celui-ci et à la section transversale de l'ouverture d'introduction de l'élargissement, sans présenter d'entrave, dans le fond de la cuve de décantation, et en ce que la section transversale de l'ouverture d'introduction de l'élargissement dans le fond de la cuve de décantation est au moins cinq fois plus grande que la section transversale du tube de décantation non agrandi, se raccordant à l'élargissement.

2. Dispositif de décantation selon la revendication 1, caractérisé en ce que les tubes de décantation présentent des parois intérieures polies, en particulier polies par voie électrochimique.
